# EUROPEAN PATENT SPECIFICATION

(11) **EP 3 010 137 B1**
(45) Date of publication and mention of the grant of the patent: **01.08.2018**
(21) Application number: 14811735.1
(22) Date of filing: 24.04.2014
(51) Int. Cl.: H02M 7/487, H02M 1/32, H02M 1/36, H02M 7/483, H02M 1/00

(54) **MULTILEVEL INVERTER**
MEHRSTUFIGER WECHSELRICHTER
ONDULEUR À PLUSIEURS NIVEAUX

(30) Priority: 14.06.2013 JP 2013125470
(43) Date of publication of application: 20.04.2016
(73) Proprietor: Fuji Electric Co., Ltd., Kawasaki-shi Kanagawa 210-9530 (JP)
(72) Inventor: SATO, Ikuya, Kawasaki-shi Kanagawa 210-9530 (JP)
(74) Representative: Appelt, Christian W.
(86) International application number: PCT/JP2014/061597
(87) International publication number: WO 2014/199732

(56) References cited:
- EP-A2- 0 608 979
- WO-A1-2013/005498
- JP-A- H07 135 781
- JP-A- 2009 027 818
- JP-A- 2012 257 361
- JP-A- 2013 085 325

## Description

### Technical Field

The present invention relates to a multilevel inverter which converts direct current power to alternating current power.

### Background Art

As an inverter which converts direct current power to alternating current power, a multilevel inverter which switches between connections to a positive voltage terminal, negative voltage terminal, and intermediate terminal, to which a direct current voltage is applied, depending on the switching element (semiconductor switch), is provided. In this kind of multilevel inverter, as a switching element connected to the intermediate terminal has a small switching voltage compared with switching elements connected to the positive voltage terminal and negative voltage terminal, a switching element with a low breakdown voltage and comparatively good electrical characteristics can be employed as the switching element connected to the intermediate terminal.

However, when all the switching elements are simultaneously turned OFF when an emergency stop of a motor connected to the inverter is attempted, there is a possibility that a potential difference between the positive voltage terminal and the negative voltage terminal is applied to the switching element connected to the intermediate terminal with a low breakdown voltage, leading to damage to the switching element. Therefore, a configuration wherein when bringing the motor to an emergency stop, the switching elements connected to the positive voltage terminal and negative voltage terminal are first turned OFF, and the switching element connected to the intermediate terminal is turned OFF a little late, is proposed (for example, PTL 1).

Meanwhile, in recent years, various international standards for electrical devices or the like, which are set so as to keep risks within an acceptable range, are developed in order to avoid an accident involving human damage due to failure. For example, in IEC61800-5-2, it is required to mount an STO (Safe Torque OFF) function which reliably stops a motor when bringing the motor to an emergency stop.

With regard to a two-level inverter, as a configuration thereof compatible with IEC61800-5-2, one wherein a circuit which invalidates a switching element connected to a positive terminal and a circuit which invalidates a switching element connected to a negative terminal are separately provided, is proposed (for example, PTL 2). In the two-level inverter, as an output to a motor is cut off when the switching element connected to one of the positive terminal or negative terminal is invalidated, the motor is stopped in the event that the other circuit functions normally even though one of the circuits is at fault.
PLT 3 describes that when a failure is detected in a three-level inverter or a system, the switch elements in a main circuit are prevented from being simultaneously turned off by a controller. In addition, a sequence for sequentially turning off the switch elements is carried out.

### Citation List

### Patent Literature

PTL 1: JP-A-2002-078351
PTL 2: JP-A-2010-284051
PTL 3: JP 2009 027818 A

### Summary of Invention

### Technical Problem

As in the above, various kinds of circuit configurations of a cut-off circuit for cutting off the supply of output voltage to a load from an inverter, when in an emergency, have thus far been proposed, but in a multilevel inverter, as the number of switching elements configuring a main circuit increases, there has been the problem that the number of wires between the cut-off circuit and the switching elements increases when attempting to reliably cut off the supply of power to a load, leading to an increase in the size of the cut-off circuit.

The invention, having been contrived bearing in mind the above kinds of circumstances, has for its object to provide a multilevel inverter wherein it is possible to safely cut off an voltage output from a main circuit, when a cut-off command is generated, without causing an increase in the size of a cut-off circuit and an increase in the number of wires. Solution to Problem

The invention provides a multilevel inverter according to claim 1 characterized by including an output circuit section which is formed of a plurality of switching elements inserted in series between a positive voltage terminal and a negative voltage terminal, between which a direct current input voltage is given, and has one of nodes between adjacent switching elements as an alternating current output terminal; a bridge section which includes a first reverse blocking type switching element, the emitter of which is connected to a neutral point which generates a voltage intermediate between the respective voltages of the positive voltage terminal and negative voltage terminal, and a second reverse blocking type switching element, the collector of which is connected to the neutral point and the emitter of which is connected to the collector of the first reverse blocking type switching element, and forms current paths, which include the first reverse blocking type switching element and second reverse blocking type switching element, between the neutral point and nodes between adjacent switching elements of the output circuit section; control signal generating means which generates control signals which switch the switching elements of the output circuit section and bridge section between ON and OFF; and a cut-off means which is configured such that:
when a first cut-off command for cutting off the output voltage of the alternating current output terminal is input, the cut-off means cuts off a set of the switching element directly connected to the positive voltage terminal, in the output circuit section, and second reverse blocking type switching element, to thereby cut off voltage output from the alternating current output terminal in spite of the condition of the control signals, and
when a second cut-off command for cutting off the output voltage of the alternating current output terminal is input, the cut-off means cuts off a set of the switching element directly connected to the negative voltage terminal, in the output circuit section, and first reverse blocking type switching element to thereby cut off voltage output from the alternating current output terminal in spite of the condition of the control signals.

According to the invention, when the switching element directly connected to the positive voltage terminal is cut off, a path of current from the positive voltage terminal to the alternating current output terminal is cut off. Also, when the second reverse blocking type switch is cut off, a path of current from the neutral point to the alternating current output terminal is cut off. Consequently, it is possible to cut off the voltage output from the alternating current output terminal by cutting off the set of the switching element, directly connected to the positive voltage terminal, and second reverse blocking type switch. Also, when the switching element directly connected to the negative voltage terminal is cut off, a path of current from the alternating current output terminal to the negative voltage terminal is cut off. Also, when the first reverse blocking type switch is cut off, a path of current from the alternating current output terminal to the neutral point is cut off. Consequently, it is possible to cut off the voltage output from the alternating current output terminal by cutting off the set of the switching element, directly connected to the negative voltage terminal, and first reverse blocking type switch.

### Brief Description of Drawings

[Fig. 1] Fig. 1 is a circuit diagram showing a configuration of a seven-level inverter which is a first embodiment of a multilevel inverter according to the invention.
[Fig. 2] Fig. 2 is a diagram illustrating modes of ON/OFF switching of switching elements of a main circuit in the embodiment.
[Fig. 3] Fig. 3 is a circuit diagram showing a configuration of a five-level inverter which is a second embodiment of the multilevel inverter according to the invention.
[Fig. 4] Fig. 4 is a circuit diagram showing a configuration of a three-level inverter which is a third embodiment of the multilevel inverter according to the invention.

### Description of Embodiments

Hereafter, a description will be given, referring to the drawings, of embodiments of the invention.

### <First Embodiment>

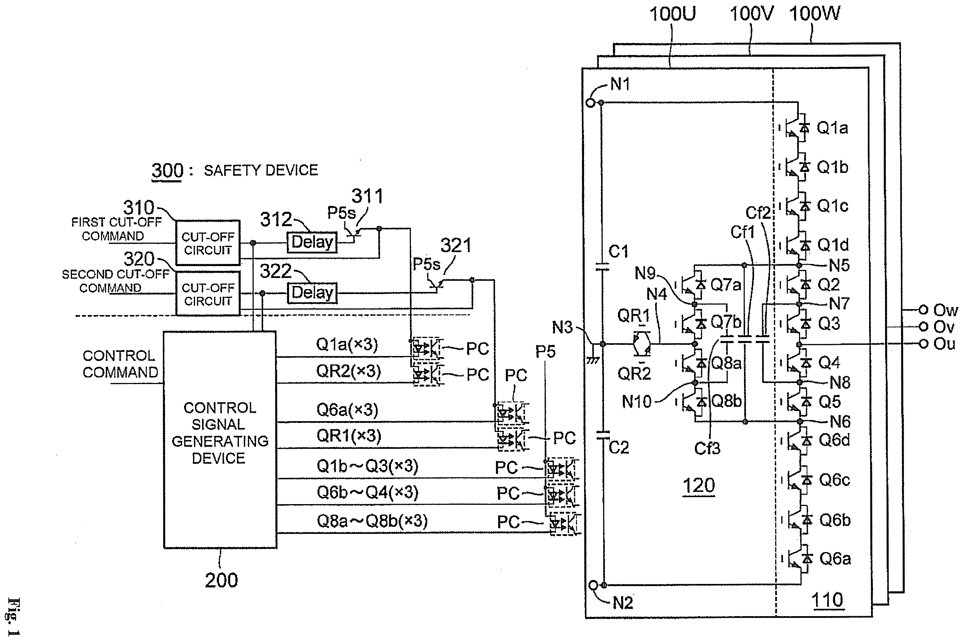

Fig. 1 is a circuit diagram showing a configuration of a seven-level inverter which is a first embodiment of a multilevel inverter according to the invention. As shown in Fig. 1, the seven-level inverter has main circuits 100U, 100V, and 100W, a control signal generating device 200, a plurality of photocouplers PC, and a safety device 300.

In Fig. 1, a direct current input voltage from an unshown direct current power source is given between a positive voltage terminal N1 and a negative voltage terminal N2 . A neutral point N3 is fixed to a voltage (a ground in the illustrated example) intermediate between the respective voltages of the positive voltage terminal N1 and negative voltage terminal N2. A capacitor C1 is inserted between the positive voltage terminal N1 and the neutral point N3. Also, a capacitor C2 is inserted between the negative voltage terminal N2 and the neutral point N3.

The main circuits 100U, 100V, and 100W are circuits which carry out switching of the direct current input voltage between the positive voltage terminal N1 and the negative voltage terminal N2 to generate U-phase, V-phase, and W-phase alternating current voltages, and supply the alternating current voltages to a motor (the illustration is omitted) which is a load. Fig. 1 illustrates a configuration of the main circuit 100U, of the main circuits 100U, 100V, and 100W. As shown in Fig. 1, the main circuit 100U has an output circuit section 110 and a bridge section 120.

The output circuit section 110 is configured of switching elements Q1a, Q1b, Q1c, Q1d, Q2, Q3, Q4, Q5, Q6d, Q6c, Q6b, and Q6a inserted in series between the positive voltage terminal N1 and the negative voltage terminal N2. Each switching element of the output circuit section 110 is configured of an IGBT (Insulated Gate Bipolar Transistor) and a flying diode. Further, in the illustrated example, the node between the switching elements Q3 and Q4 is a U-phase alternating current output terminal Ou.

The bridge section 120 is a circuit which forms current paths, which include switching elements and flying capacitors, between the neutral point N3 and nodes between adjacent switching elements of the output circuit section 110.

In the bridge section 120, a first reverse blocking type switching element QR1 and a second reverse blocking type switching element QR2 are IGBTs. The emitter of the first reverse blocking type switching element QR1 and the collector of the second reverse blocking type switching element QR2 are commonly connected to the neutral point N3. Also, the collector of the first reverse blocking type switching element QR1 and the emitter of the second reverse blocking type switching element QR2 are connected to each other at a node N4.

Switching elements Q7a, Q7b, Q8a, and Q8b are switching elements each formed of an IGBT and a flying diode. Herein, the switching elements Q7a and Q7b are inserted in series between a node N5 between the switching elements Q1d and Q2 of the output circuit section 110 and the node N4. Also, the switching elements Q8a and Q8b are inserted in series between the node N4 and a node N6 between the switching elements Q5 and Q6d of the output circuit section 110. Also, a flying capacitor Cf1 is inserted between the node N5 between the switching elements Q1d and Q2, and the node N6 between the switching elements Q5 and Q6d, of the output circuit section 110. Also, a flying capacitor Cf2 is inserted between a node N7 between the switching elements Q2 and Q3, and a node N8 between the switching elements Q4 and Q5, of the output circuit section 110. Also, a flying capacitor Cf3 is inserted between a node N9 between the switching elements Q7a and Q7b and a node N10 between the switching element Q8a and Q8b.

The above is the configuration of the bridge section 120.

In each of the main circuits 100U, 100V, and 100W, a set of four switching elements Q1a, Q1b, Q1c, and Q1d, a set of four switching elements Q6a, Q6b, Q6c, and Q6d, a set of two switching elements Q7a and Q7b, and a set of two switching elements Q8a and Q8b are such that ON/OFF switching is carried out for each set when in normal operation. It is in order to increase the breakdown voltage of each set, and optimize a voltage which each switching element bears when the main circuit is in operation, that each set is configured by connecting a plurality of switching elements in series.

The control signal generating device 200 is a device which, in accordance with a control command, generates pulse width modulated pulse signals as control signals for carrying out ON/OFF switching of each of the switching elements configuring each main circuit 100U, 100V, and 100W. The control signals generated by the control signal generating circuit 200 are transmitted to the respective switching elements in the main circuits 100U, 100V, and 100W via the plurality of photocouplers PC.

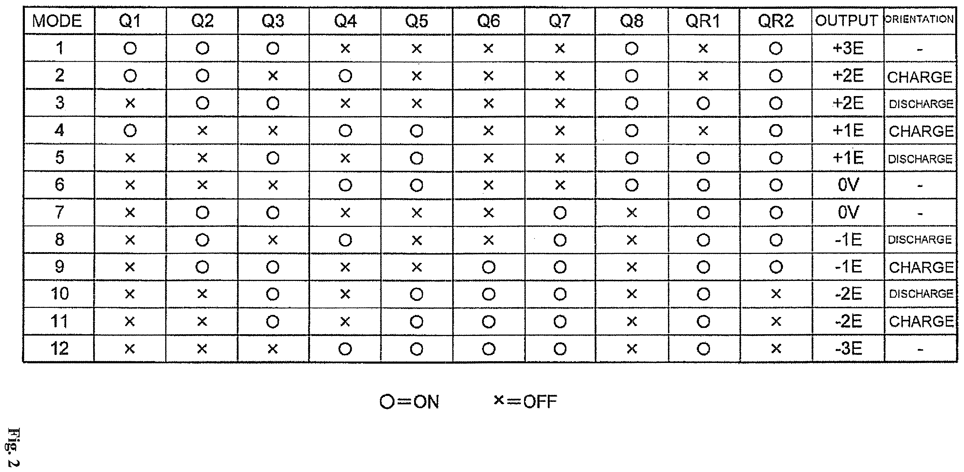

Fig. 2 is a diagram illustrating modes of ON/OFF switching of the switching elements of the main circuit 100U when in normal operation. In Fig. 2, Q1 represents the switching elements Q1a to Q1d, Q6 represents the switching elements Q6a to Q6d, Q7 represents the switching elements Q7a and Q7b, and Q8 represents the switching elements Q8a and Q8b.

In the embodiment, in a condition in which a direct current voltage +3E is applied between the positive voltage terminal N1 and the neutral point N3, and a direct current voltage +3E is applied between the neutral point N3 and the negative voltage terminal N2, the control signal generating device 200 switches the switching elements of the main circuit 100U between ON and OFF, thereby causing seven kinds of voltages +3E, +2E, +1E, 0V, -1E, -2E, and -3E to be output from the main circuit 100U to the alternating current output terminal Ou, as shown in Fig. 2.

ON/OFF states of the switching elements of the main circuit 100U in normal operation have modes 1 to 12 shown in Fig. 2.

In the mode 1, the voltage +3E is output from the output terminal Ou with Q1 to Q3, Q8, and QR2 turned ON and Q4 to Q7 and QR1 turned OFF. In this case, a direct current voltage +6E is applied to six switching elements Q4, Q5, Q6d, Q6c, Q6b, and Q6a which are turned OFF. In this example, a configuration is such that the same voltage +1E is applied to the six switching elements. Consequently, the flying capacitors Cf1 and Cf2 are charged with the voltages +2E and +1E respectively. Also, the charge voltage +2E of the flying capacitor Cf1 is applied to two switching elements Q7a and Q7b which are turned OFF. In this example, a configuration is such that the same voltage +1E is applied to the two switching elements. Consequently, the flying capacitor Cf3 is charged with the voltage +1E.

In the mode 12, the voltage -3E is output from the output terminal Ou with Q1 to Q3, Q8, and QR2 turned OFF and Q4 to Q7 and QR1 turned ON. In this case, the direct current voltage +6E is applied to six switching elements Q1a, Q1b, Q1c, Q1d, Q2, and Q3 which are turned OFF. In this example, a configuration is such that the same voltage +1E is applied to the six switching elements. Consequently, the flying capacitors Cf1 and Cf2 are charged with the voltages +2E and +1E respectively. Also, the charge voltage +2E of the flying capacitor Cf1 is applied to two switching elements Q8a and Q8b which are turned OFF. In this example, a configuration is such that the same voltage +1E is applied to the two switching elements. Consequently, the flying capacitor Cf3 is charged with the voltage +1E.

In this way, in the embodiment, the flying capacitors Cf1, Cf2, and Cf3 are charged with the voltages +2E, +1E, and +1E respectively in both modes 1 and 12. Further, the control signal generating device 200, in the modes 2 to 11, forms various kinds of current paths, which include flying capacitors and switching elements, between the neutral point N3 and nodes between adjacent switching elements of the output circuit section 110, thereby causing various kinds of voltages to be output from the alternating current output terminal Ou.

For example, in the mode 2, Q1, Q2, Q4, Q8, and QR2 are turned ON, and Q3, Q5 to Q7, and QR1 are turned OFF. In this case, the voltage +2E wherein the voltage +3E of the positive voltage terminal N1 is reduced by the charge voltage +1E of the flying capacitor Cf2 is output from the output terminal Ou via the switching element Q4.

Also, in the mode 3, Q2, Q3, Q8, QR1, and QR2 are turned ON, and Q1 and Q4 to Q7 are turned OFF. In this case, the voltage +2E wherein the charge voltage +2E of the flying capacitor Cf1 is added to a voltage 0V of the neutral point N3 is output from the output terminal Ou via the switching elements Q2 and Q3.

The same also applies to the other modes 4 to 11, and the control signal generating device 200 generates various kinds of control signals in response to a control command, and forms various kinds of current paths, which include flying capacitors and switching elements, between the neutral point N3 and nodes between adjacent switching elements of the output circuit section 110, thereby enabling various kinds of voltages to be output from the alternating current output terminal Ou.

Heretofore, a description has been given of the main circuit 100U, but the control signal generating device 200 can also switch the switching elements inside each main circuit 100V and 100W between ON and OFF, thus causing each main circuit 100V and 100W to output various kinds of voltages.

The safety device 300 is a device which, when a cut-off command is generated, forces some switching elements in the main circuits 100U, 100V, and 100W to be turned OFF in spite of any control signal generated by the control signal generating device 200, thus cutting off the supply of alternating current voltage to a load from the main circuits 100U, 100V, and 100W.

The safety device 300 in the embodiment includes two cut-off circuits 310 and 320. A feature of the embodiment lies in the two cut-off circuits.

As a safety device of the multilevel inverter provided thus far, one which turns OFF all the switching elements of the output circuit sections 110 of the main circuits 100U, 100V, and 100W, when given an output voltage cut-off command, has been commonly used.

However, in the case of the kind of seven-level inverter in the embodiment, the output circuit section 110 for one phase includes 12 switching elements Q1a to Q6a in order from the high potential side in Fig. 1. Consequently, in order to carry out output voltage cut-offs for three phases when a cut-off command is generated, it is necessary to transmit signals, which cut off 36 switching elements, using 36 wires in total for the three phases.

However, the necessity of 36 wires to cut off the switching elements increases the wiring patterns of the multilevel inverter, leading to an increase in circuit size. Also, there is the possibility of not only an increase in the overall cost of the device, but also of being vulnerable to noise or the like due to an increase in the number of wires, resulting in a decrease in reliability.

The two cut-off circuits 310 and 320 in the embodiment solve this problem.

In Fig. 1, a drive current is directly supplied from a power source P5 to the photocouplers PC which transmit control signals to the switching elements Q1b, Q1c, Q1d, Q2 to Q5, Q6d, Q6c, Q6b, Q7a, Q7b, Q8a, and Q8b of each phase U, V, and W.

As opposed to this, a drive current is supplied from a power source P5s, via an NPN transistor 311, to the photocouplers PC which transmit control signals to a set of the switching element Q1a and reverse blocking type switching element QR2 of each phase U, V, and W. Also, a drive current is supplied from a power source P5s, via an NPN transistor 321, to the photocouplers PC which transmit control signals to a set of the switching element Q6a and reverse blocking type switching element QR1 of each phase U, V, and W. Further, an output terminal of the cut-off circuit 310 is connected to the base of the NPN transistor 311 via a delay circuit 312, and an output terminal of the cut-off circuit 320 is connected to the base of the NPN transistor 321 via a delay circuit 322.

The cut-off circuits 310 and 320 supply signals "1" to the bases of the NPN transistors 311 and 312 via the delay circuits 312 and 322 respectively when the seven-level inverter is in normal operation. In this condition, the NPN transistors 311 and 312 are turned ON, and a drive current is supplied to the photocouplers PC which transmit control signals to the set of the switching element Q1a and reverse blocking type switching element QR2, and to the photocouplers PC which transmit control signals to the set of the switching element Q6a and reverse blocking type switching element QR1, via the NPN transistors 311 and 312.

However, when a first cut-off command is given to the cut-off circuit 310 by detecting some anomaly, the cut-off circuit 310 switches the output signal to "0". The signal "0" is given to the NPN transistor 311 via the delay circuit 312, as a result of which the NPN transistor 311 is turned OFF, thus cutting off the supply of the drive current to the photocouplers PC which transmit control signals to the set of the switching element Q1a and reverse blocking type switching element QR2. As a result of this, the switching element Q1a and reverse blocking type switching element QR2 of the main circuit of each phase U, V, and W are cut off in spite of the contents of control signals output by the control signal generating device 200. By so doing, voltage outputs from the output terminals Ou, Ov, and Ow of the main circuits are cut off.

Also, when a second cut-off command is given to the cut-off circuit 320 by detecting some anomaly, the cut-off circuit 320 switches the output signal to "0". The signal "0" is given to the NPN transistor 321 via the delay circuit 322, as a result of which the NPN transistor 321 is turned OFF, thus cutting off the supply of the drive current to the photocouplers PC which transmit control signals to the set of the switching element Q6a and reverse blocking type switching element QR1. As a result of this, the switching element Q6a and reverse blocking type switching element QR1 of the main circuit of each phase U, V, and W are cut off in spite of the contents of control signals output by the control signal generating device 200. By so doing, voltage outputs from the output terminals Ou, Ov, and Ow of the main circuits are cut off.

The first cut-off command and the second cut-off command may be independently generated based on different reasons, or may be simultaneously generated based on the same reason.

Herein, a description will be given of the reason that it is possible to cut off the output from the alternating current output terminal by cutting off the set of the switching elements Q1a and QR2 or the set of the switching elements Q6a and QR1. As shown in Fig. 1, when the switching element Q1a directly connected to the positive voltage terminal N1 of each phase U, V, and W is turned OFF, no current flows from the positive voltage terminal N1 to the output terminals Ou, Ov, and Ow even though all the switching elements Q1b to Q3 are turned ON. Furthermore, when the switching element QR2 is turned OFF, no current flows from the neutral point N3 toward the output terminals Ou, Ov, and Ow in spite of the conditions of the switching elements Q7a, Q7b, Q8a, and Q8b. Consequently, when the switching elements Q1a and QR2 of all the output three phases, that is, a total of six switching elements are turned OFF, no power can be supplied from the positive voltage terminal N1 side or neutral point N3 side, meaning that a voltage across an output line becomes zero, and the supply of power from the seven-level inverter stops.

In the same way, when the switching element Q6a connected to the negative voltage terminal N2 side of each phase is turned OFF, no current flows from the alternating current output terminals Ou, Ov, and Ow to the negative voltage terminal N2 side. Furthermore, when the switching element QR1 is turned OFF, no current flows from the alternating current output terminals Ou, Ov, and Ow to the neutral point N3. Consequently, when the switching elements Q6a and QR1 of all the output three phases, that is, a total of six switching elements are turned OFF, a route from the output terminals Ou, Ov, and Ow back to the negative voltage terminal N2 side is cut off, meaning that the voltage across the output line becomes zero, and the supply of power from the seven-level inverter stops.

The cut-off circuit 310 and the cut-off circuit 320, even when only one of them operates, can cut off the supply of power from the seven-level inverter. In this sense, the cut-off circuits 310 and 320 satisfy redundancy.

A description will be given of a relationship between the cut-off circuits 310 and 320 and the control signal generating device 200. In order to protect the switching elements of the main circuits 100U, 100V, and 100W, the control signal generating device 200 in the embodiment, in response to a cut-off command from the external, turns OFF the switching elements in accordance with a stop sequence, separately from the cut-off circuits 310 and 320. As an actual implementation method, the switching elements are stopped in order, starting with the outer side switching elements (the switching elements close to the positive voltage terminal N1 side and negative voltage terminal N2 side), taking into account the phase of the output voltage, and the orientation of the output current, of the main circuit immediately before given a cut-off command, and finally ending with the switching elements QR1 and QR2 connected to the neutral point being turned OFF. Meanwhile, when placing emphasis on functional safety, the safety device 300, as it only has to be able to cut off the supply of power to a load from the seven-level inverter even when a switching element fails, only needs to have only the cut-off circuits 310 and 320. However, it is also important to protect the switching elements of the main circuits against failure. Therefore, in order to achieve both the object of cutting off the supply of power to a load and the object of protecting the switching elements of the main circuits, the configuration is as follows in the embodiment.
(1) The cut-off circuit 310 or 320, when a cut-off command is input from the external, gives the cut-off command to the control signal generating device 200 too, thus causing the control signal generating device 200 to start a normal stop sequence.
(2) The cut-off circuit 310 or 320, by being given the cut-off command, switches the output signal to "0", but the delay circuit 312 or 322 supplies the signal "0" to the NPN transistor 311 or 321 with a delay of a delay time of on the order of a time required for the stop sequence of the control signal generating device 200. Consequently, the set of the switching elements Q1a and QR2 or the set of the switching elements Q6a and QR1 is cut off after a time of on the order of the time required for the stop sequence of the control signal generating device 200 has elapsed from the cut-off command being given.
(3) The safety device 300 is such that a time from a cut-off command being input until a power cut-off is completed is demonstrated to a user as an execution time including the delay time of the delay circuits 312 and 322.
(4) A diagnosis circuit which diagnoses whether the cut-off circuits 310 and 320 are operating normally when the seven-level inverter stops is included in the two cut-off circuits 310 and 320, wherein a cut-off command and a monitoring signal are diagnosed, and when the cut-off circuit 310 or 320 is anomalous, power is cut off in spite of the condition of the cut-off command, thus maintaining the condition.

The above are the details of the embodiment.

According to the embodiment, as a configuration is such that the set of the switching element, directly connected to the positive voltage terminal, and reverse blocking type switching element, the collector of which is connected to the neutral point, in the main circuit, or the set of the switching element, directly connected to the negative voltage terminal, and reverse blocking type switching element, the emitter of which is connected to the neutral point, in the main circuit, is cut off when a cut-off command is generated, it is possible to obtain the advantageous effect of it being possible to cut off the supply of power to a load from the multilevel inverter without increasing the number of wires between the cut-off circuits and the switching elements or increasing the size of the cut-off circuits.

Also, according to the embodiment, the cut-off circuit which cuts off the set of the switching element, directly connected to the positive voltage terminal, and reverse blocking type switching element, the collector of which is connected to the neutral point, in response to a cut-off command, and the cut-off circuit which cuts off the set of the switching element, directly connected to the negative voltage terminal, and reverse blocking type switching element, the emitter of which is connected to the neutral point, in response to a cut-off command, are provided. Consequently, for example, even when one cut-off circuit does not operate, the other cut-off circuit operates, meaning that it is possible to enhance the reliability in cutting off the supply of power to a load from the seven-level inverter.

Also, according to the embodiment, as the stop sequence of the control signal generating device 200 and the cut-off operation of specific switching elements by the cut-off circuits 310 and 320 are provided concurrently, it is possible to achieve both the object of protecting the switching elements of the main circuits and the object of cutting off the supply of power to a load from the seven-level inverter.

### <Second Embodiment>

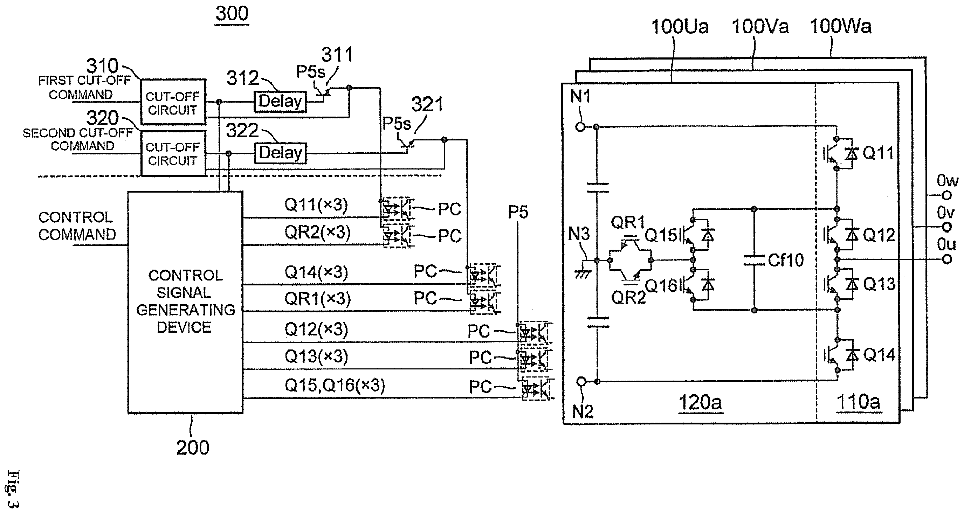

Fig. 3 is a block diagram showing a configuration of a five-level inverter which is a second embodiment of the multilevel inverter according to the invention. In this embodiment, the configuration of main circuits 100Ua, 100Va, and 100Wa is different from in the first embodiment. The main circuit 100Ua has an output circuit section 110a and a bridge section 120a. The output circuit section 110a has switching elements Q11, Q12, Q13, and Q14 inserted in series between a positive voltage terminal N1 and a negative voltage terminal N2. In the bridge section 120a, reverse blocking type switching elements QR1 and QR2 are the same as those of the first embodiment. A switching element Q15 is inserted between the common connection point, of the collector of the reverse blocking type switching element QR1 and the emitter of the reverse blocking type switching element QR2, and the node between the switching elements Q11 and Q12. A switching element Q16 is inserted between the common connection point, of the collector of the reverse blocking type switching element QR1 and the emitter of the reverse blocking type switching element QR2, and the node between the switching elements Q13 and Q14. A flying capacitor Cf10 is inserted between the node between the switching elements Q11 and Q12 and the node between the switching elements Q13 and Q14. The main circuit 100Ua can output voltages +2E, +E, 0V, -E, and -2E from an output terminal Ou by ON/OFF switching of the switching elements Q11 to Q14, QR1, and QR2 being carried out with a voltage +2E being given to the positive voltage terminal N1 and a voltage -2E being given to the negative voltage terminal N2. The above is the configuration of the main circuit 100Ua. The main circuits 100Va and 100Wa are also the same as the main circuit 100Ua.

The configuration of a control signal generating device 200 is the same as in the first embodiment. Control signals output by the control signal generating device 200 are supplied to the respective switching elements in the main circuits via a plurality of photocouplers PC. Also, the configuration of a safety device 300 is also the same as in the first embodiment.

In Fig. 3, a drive current is directly supplied from a power source P5 to the photocouplers PC which transmit control signals to the switching elements Q12, Q13, Q15, and Q16 of each phase U, V, and W.

As opposed to this, a drive current is supplied from a power source P5s, via an NPN transistor 311, to the photocouplers PC which transmit control signals to a set of the switching element Q11 and reverse blocking type switching element QR2 of each phase U, V, and W. Also, a drive current is supplied from a power source P5s, via an NPN transistor 321, to the photocouplers PC which transmit control signals to a set of the switching element Q14 and reverse blocking type switching element QR1 of each phase U, V, and W. Further, an output terminal of a cut-off circuit 310 is connected to the base of the NPN transistor 311 via a delay circuit 312, and an output terminal of a cut-off circuit 320 is connected to the base of the NPN transistor 321 via a delay circuit 322.

In this embodiment too, in the same way as in the first embodiment, the set of the switching element Q11, connected to the positive voltage terminal N1, and reverse blocking type switching element QR2, the collector of which is connected to a neutral point N3, is cut off by the cut-off circuit 310, and the set of the switching element Q14, connected to the negative voltage terminal N2, and reverse blocking type switching element QR1, the emitter of which is connected to the neutral point N3, is cut off by the cut-off circuit 320, when a cut-off command is generated. Consequently, it is possible to obtain the same advantageous effects as in the first embodiment. The relationship between the cut-off circuits 310 and 320 and the control signal generating device 200 is the same as in the first embodiment.

### <Third Embodiment>

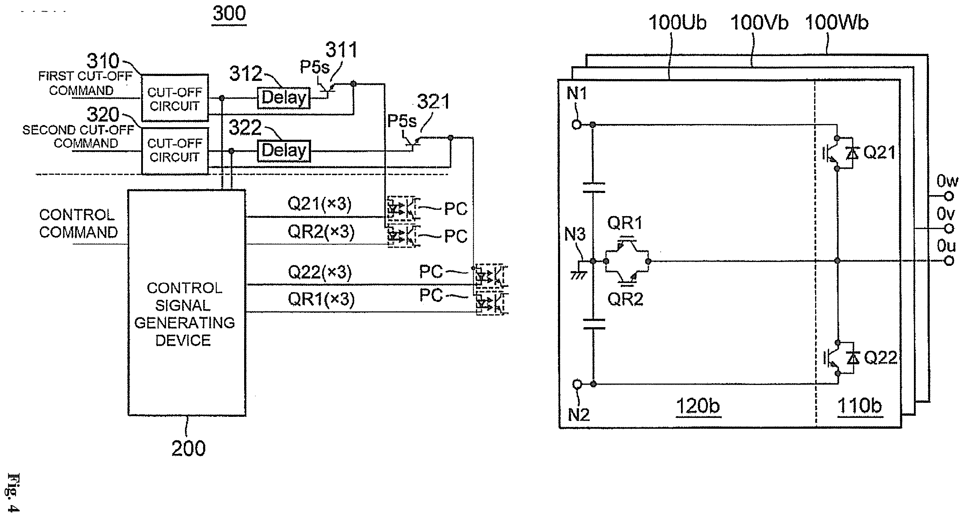

Fig. 4 is a block diagram showing a configuration of a three-level inverter which is a third embodiment of the multilevel inverter according to the invention. In this embodiment, the configuration of main circuits 100Ub, 100Vb, and 100Wb is different from in the first embodiment. The main circuit 100Ub has an output circuit section 110b and a bridge section 120b. The output circuit section 110b has switching elements Q21 and Q22 inserted in series between a positive voltage terminal N1 and a negative voltage terminal N2. In the bridge section 120b, reverse blocking type switching elements QR1 and QR2 are the same as those of the first embodiment. The common connection point of the collector of the reverse blocking type switching element QR1 and the emitter of the reverse blocking type switching element QR2 is connected to the node between the switching elements Q21 and Q22. The main circuit 100Ub can output voltages +E, 0V, and -E from an output terminal Ou by ON/OFF switching of the switching elements Q21, Q22, QR1, and QR2 being carried out with a voltage +E being given to the positive voltage terminal N1 and a voltage -E being given to the negative voltage terminal N2. The above is the configuration of the main circuit 100Ub. The main circuits 100Vb and 100Wb are also the same as the main circuit 100Ub.

The configuration of a control signal generating device 200 is basically the same as in the first embodiment. Control signals output by the control signal generating device 200 are supplied to the respective switching elements in the main circuits via a plurality of photocouplers PC. Also, the configuration of a safety device 300 is also the same as in the first embodiment.

In Fig. 4, a drive current is supplied from a power source P5s, via an NPN transistor 311, to the photocouplers PC which transmit control signals to a set of the switching element Q21 and reverse blocking type switching element QR2 of each phase U, V, and W. Also, a drive current is supplied from a power source P5s, via an NPN transistor 321, to the photocouplers PC which transmit control signals to a set of the switching element Q22 and reverse blocking type switching element QR1 of each phase U, V, and W. Further, in the same way as in the first embodiment, an output terminal of a cut-off circuit 310 is connected to the base of the NPN transistor 311 via a delay circuit 312, and an output terminal of a cut-off circuit 320 is connected to the base of the NPN transistor 321 via a delay circuit 322.

In this embodiment too, in the same way as in the first embodiment, the set of the switching element Q21, connected to the positive voltage terminal N1, and reverse blocking type switching element QR2, the collector of which is connected to a neutral point N3, is cut off by the cut-off circuit 310, and the set of the switching element Q22, connected to the negative voltage terminal N2, and reverse blocking type switching element QR1, the emitter of which is connected to the neutral point N3, is cut off by the cut-off circuit 320, when a cut-off command is generated. The relationship between the cut-off circuits 310 and 320 and the control signal generating device 200 is the same as in the first embodiment.

Each switching element configuring the multilevel inverter may be configured of not only an Si-based semiconductor but, for example, a wide band gap semiconductor of SiC, GaN, diamond, or the like, or only some of the switching elements configuring the multilevel inverter may be configured of a wide band gap semiconductor.

### Reference Signs List

100U, 100V, 100W, 100Ua, 100Va, 100Wa, 100Ub, 100Vb, 100Wb ······ Main circuit, N1 ······ Positive voltage terminal, N2 ...... Negative voltage terminal, N3 ······ Neutral point, Q1a, Q1b, Q1c, Q1d, Q2, Q3, Q4, Q5, Q6a, Q6b, Q6c, Q6d, Q7a, Q7b, Q8a, Q8b, Q11, Q12, Q13, Q14, Q15, Q16, Q21, Q22 ······ Switching element, QR1, QR2 ······ Reverse blocking type switching element, 110, 110a, 110b ······ Output circuit section, 120, 120a, 120b ······ Bridge section, PC ······ Photocoupler, 200 ······ Control signal generating device, 300 ······ Safety device, 310, 320 ······ Cut-off circuit, 311, 321 ······ NPN transistor, 312, 322 ······ Delay circuit.

## Claims

1. A multilevel inverter, comprising:
an output circuit section (110) which is formed of a plurality of switching elements (Q1a-d, Q2, Q3, Q4, Q5, Q6a-d) inserted in series between a positive voltage terminal (N1) and a negative voltage terminal (N2), between which a direct current input voltage is given, and has one of nodes between adjacent switching elements (Q1a-d, Q2, Q3, Q4, Q5, Q6a-d) as an alternating current output terminal (Ou, Ov, Ow);
a bridge section (120) which includes a first reverse blocking type switching element (QR1), the emitter of which is connected to a neutral point (N3) which generates a voltage intermediate between the respective voltages of the positive voltage terminal and negative voltage terminal, and a second reverse blocking type switching element (QR2), the collector of which is connected to the neutral point (N3) and the emitter of which is connected to the collector of the first reverse blocking type switching element (QR1), and forms current paths, which include the first reverse blocking type switching element (QR1) and second reverse blocking type switching element (QR2), between the neutral point (N3) and nodes between adjacent switching elements (Q1a-d, Q2, Q3, Q4, Q5, Q6a-d) of the output circuit section (110);
control signal generating means (200) which generates control signals which switch the switching elements (Q1a-d, Q2, Q3, Q4, Q5, Q6a-d, QR1, QR2) of the output circuit section (110) and bridge section (120) between ON and OFF; and
a cut-off means (310, 320) which is configured such that:
when a first cut-off command for cutting off the output voltage of the alternating current output terminal (Ou, Ov, Ow) is input, the cut-off means (310, 320) cuts off a set of the switching element (Q1a) directly connected to the positive voltage terminal (N1), in the output circuit section (110), and second reverse blocking type switching element (QR2), to thereby cut off voltage output from the alternating current output terminal (Ou, Ov, Ow) in spite of the condition of the control signals, and
when a second cut-off command for cutting off the output voltage of the alternating current output terminal (Ou, Ov, Ow) is input, the cut-off means (310, 320) cuts off a set of the switching element (Q6a) directly connected to the negative voltage terminal (N2), in the output circuit section (110), and first reverse blocking type switching element (QR1) to thereby cut off voltage output from the alternating current output terminal (Ou, Ov, Ow) in spite of the condition of the control signals.

2. The multilevel inverter according to claim 1, wherein
the cut-off means (310, 320), when a cut-off command is input, cuts off both the set of the switching element (Q1a) directly connected to the positive voltage terminal (N1), in the output circuit section (110), and second reverse blocking type switching element (QR2), and the set of the switching element (Q6a) directly connected to the negative voltage terminal (N2), in the output circuit section (110), and first reverse blocking type switching element (QR1), in spite of the condition of the control signals.

3. The multilevel inverter according to claim 1, wherein
the cut-off means (310, 320), when a cut-off command is input, gives the cut-off command to the control signal generating means (200), and subsequently, cuts off the set of the switching element (Q1a), directly connected to the positive voltage terminal (N1), in the output circuit section (no), and second reverse blocking type switching element (QR2), or the set of the switching element (Q6a) directly connected to the negative voltage terminal (N2), in the output circuit section (110), and first reverse blocking type switching element (QR1), with a delay of a predetermined time, and that
the control signal generating means (200) which has been given the cut-off command cuts off the switching elements (Q1a-d, Q2, Q3, Q4, Q5, Q6a-d) of the output circuit section (110) and bridge section (120) in order in accordance with a predetermined stop sequence.

4. The multilevel inverter according to claim 2, wherein
the cut-off means (310, 320) which, when a cut-off command is input, gives the cut-off command to the control signal generating means (200), and subsequently, cuts off the set of the switching element (Q1a) directly connected to the positive voltage terminal (N1), in the output circuit section (110), and second reverse blocking type switching element (QR2), or the set of the switching element (Q6a) directly connected to the negative voltage terminal (N2), in the output circuit section (110), and first reverse blocking type switching element (QR1), with a delay of a predetermined time, and that
the control signal generating means (200) which has been given the cut-off command cuts off the switching elements (Q1a-d, Q2, Q3, Q4, Q5, Q6a-d) of the output circuit section (110) and bridge section (120) in order in accordance with a predetermined stop sequence.

## Patentansprüche

1. Mehrstufiger Wechselrichter, der Folgendes umfasst:
einen Ausgangsschaltungsabschnitt (110), welcher aus mehreren Schaltelementen (Q1a-d, Q2, Q3, Q4, Q5, Q6a-d) ausgebildet ist, welche in Reihe zwischen einem positiven Spannungsanschluss (N1) und einem negativen Spannungsanschluss (N2) eingesetzt sind, zwischen welchen eine Gleichstrom-Eingangsspannung anliegt, und der einen der Knoten zwischen benachbarten Schaltelementen (Q1a-d, Q2, Q3, Q4, Q5, Q6a-d) als einen Wechselstrom-Ausgangsanschluss (Ou, Ov, Ow) aufweist;
einen Brückenabschnitt (120), welcher ein rückwärtssperrendes Schaltelement (QR1), dessen Emitter mit einem neutralen Punkt (N3) verbunden ist, welcher eine Zwischenspannung zwischen den jeweiligen Spannungen des positiven Spannungsanschlusses und des negativen Spannungsanschlusses erzeugt, und ein zweites rückwärtssperrendes Schaltelement (QR2) umfasst, dessen Kollektor mit dem neutralen Punkt (N3) verbunden ist und dessen Emitter mit dem Kollektor des ersten rückwärtssperrenden Schaltelements (QR1) verbunden ist, und Stromwege, welche das erste rückwärtssperrende Schaltelement (QR1) und das zweite rückwärtssperrende Schaltelement (QR2) umfassen, zwischen dem neutralen Punkt (N3) und Knoten zwischen benachbarten Schaltelementen (Q1a-d, Q2, Q3, Q4, Q5, Q6a-d) des Ausgangsschaltungsabschnitts (110) ausbildet;
Steuersignal-Erzeugungsmittel (200), welche Steuersignale erzeugen, welche die Schaltelemente (Q1a-d, Q2, Q3, Q4, Q5, Q6a-d, QR1, QR2) des Ausgangsschaltungsabschnitts (110) und des Brückenabschnitts (120) zwischen EIN und AUS umschalten; und
ein Trennmittel (310, 320), welches derartig konfiguriert ist, dass:
wenn ein erster Trennbefehl zum Trennen der Ausgangsspannung des Wechselstrom-Ausgangsanschlusses (Ou, Ov, Ow) eingegeben wird, das Trennmittel (310, 320) einen Satz, bestehend aus dem Schaltelement (Q1a), welches unmittelbar mit dem positiven Spannungsanschluss (N1) verbunden ist, in dem Ausgangsschaltungsabschnitt (110) und aus dem zweiten rückwärtssperrenden Schaltelement (QR2), trennt, um dadurch einen Spannungsausgang von dem Wechselstrom-Ausgangsanschluss (Ou, Ov, Ow) trotz des Zustands der Steuerungssignale zu trennen, und
wenn ein zweiter Trennbefehl zum Trennen der Ausgangsspannung des Wechselstrom-Ausgangsanschlusses (Ou, Ov, Ow) eingegeben wird, das Trennmittel (310, 320) einen Satz, bestehend aus dem Schaltelement (Q6a), welches unmittelbar mit dem negativen Spannungsanschluss (N2) verbunden ist, in dem Ausgangsschaltungsabschnitt (110) und aus dem ersten rückwärtssperrenden Schaltelement (QR1), trennt, um dadurch einen Spannungsausgang von dem Wechselstrom-Ausgangsanschluss (Ou, Ov, Ow) trotz des Zustands der Steuerungssignale zu trennen.

2. Mehrstufiger Wechselrichter nach Anspruch 1, wobei
das Trennmittel (310, 320), wenn ein Trennbefehl eingegeben wird, sowohl den Satz, bestehend aus dem Schaltelement (Q1a), welches unmittelbar mit dem positiven Spannungsanschluss (N1) verbunden ist, in dem Ausgangsschaltungsabschnitt (110) und aus dem zweiten rückwärtssperrenden Schaltelement (QR2), als auch den Satz, bestehend aus dem Schaltelement (Q6a), welches unmittelbar mit dem negativen Spannungsanschluss (N2) verbunden ist, in dem Ausgangsschaltungsabschnitt (110) und aus dem ersten rückwärtssperrenden Schaltelement (QR1), trotz des Zustands der Steuerungssignale trennt.

3. Mehrstufiger Wechselrichter nach Anspruch 1, wobei
das Trennmittel (310, 320), wenn ein Trennbefehl eingegeben wird, den Trennbefehl an das Steuersignal-Erzeugungsmittel (200) weitergibt und nachfolgend den Satz, bestehend aus dem Schaltelement (Q1a), welches unmittelbar mit dem positiven Spannungsanschluss (N1) verbunden ist, in dem Ausgangsschaltungsabschnitt (110) und aus dem zweiten rückwärtssperrenden Schaltelement (QR2), oder den Satz, bestehend aus dem Schaltelement (Q6a), welches unmittelbar mit dem negativen Spannungsanschluss (N2) verbunden ist, in dem Ausgangsschaltungsabschnitt (110) und aus dem ersten rückwärtssperrenden Schaltelement (QR1), mit einer Verzögerung durch eine vorgegebene Zeit, trennt, und dass
das Steuersignal-Erzeugungsmittel (200), an welches der Trennbefehl weitergegeben wurde, die Schaltelemente (Q1a-d, Q2, Q3, Q4, Q5, Q6a-d) des Ausgangsschaltungsabschnitts (110) und des Brückenabschnitts (120) der Reihe nach gemäß einer vorgegebenen Stoppsequenz trennt.

4. Mehrstufiger Wechselrichter nach Anspruch 2, wobei
das Trennmittel (310, 320), wenn ein Trennbefehl eingegeben wird, den Trennbefehl an das Steuersignal-Erzeugungsmittel (200) weitergibt und nachfolgend den Satz, bestehend aus dem Schaltelement (Q1a), welches unmittelbar mit dem positiven Spannungsanschluss (N1) verbunden ist, in dem Ausgangsschaltungsabschnitt (110) und aus dem zweiten rückwärtssperrenden Schaltelement (QR2), oder den Satz, bestehend aus dem Schaltelement (Q6a), welches unmittelbar mit dem negativen Spannungsanschluss (N2) verbunden ist, in dem Ausgangsschaltungsabschnitt (110) und aus dem ersten rückwärtssperrenden Schaltelement (QR1), mit einer Verzögerung durch eine vorgegebene Zeit, trennt, und dass
das Steuersignal-Erzeugungsmittel (200), an welches der Trennbefehl weitergegeben wurde, die Schaltelemente (Q1a-d, Q2, Q3, Q4, Q5, Q6a-d) des Ausgangsschaltungsabschnitts (110) und des Brückenabschnitts (120) der Reihe nach gemäß einer vorgegebenen Stoppsequenz trennt.

## Revendications

1. Onduleur multiniveau, comprenant :
une section de circuit de sortie (110) qui est formée d'une pluralité d'éléments de commutation (Q1a-d, Q2, Q3, Q4, Q5, Q6a-d) insérés en série entre une borne de tension positive (N1) et une borne de tension négative (N2), entre lesquelles une tension d'entrée de courant continu est donnée, et présente l'un parmi des noeuds entre des éléments de commutation adjacents (Q1a-d, Q2, Q3, Q4, Q5, Q6a-d) en tant qu'une borne de sortie de courant alternatif (Ou, Ov, Ow) ;
une section de pont (120) qui inclut un premier élément de commutation de type à blocage inverse (QR1), dont l'émetteur est connecté à un point neutre (N3) qui génère une tension intermédiaire entre les tensions respectives de la borne de tension positive et de la borne de tension négative, et un second élément de commutation de type à blocage inverse (QR2), dont le collecteur est connecté au point neutre (N3) et dont l'émetteur est connecté au collecteur du premier élément de commutation de type à blocage inverse (QR1), et forme des trajets de courant, lesquels incluent le premier élément de commutation de type à blocage inverse (QR1) et le second élément de commutation de type à blocage inverse (QR2), entre le point neutre (N3) et des noeuds entre des éléments de commutation adjacents (Q1a-d, Q2, Q3, Q4, Q5, Q6a-d) de la section de circuit de sortie (110) ;
un moyen de génération de signaux de commande (200) qui génère des signaux de commande qui commutent les éléments de commutation (Q1a-d, Q2, Q3, Q4, Q5, Q6a-d, QR1, QR2) de la section de circuit de sortie (110) et de la section de pont (120) entre des états « ARRÊT » et « MARCHE » ; et
un moyen de coupure (310, 320) qui est configuré de sorte que :
lorsqu'une première commande de coupure destinée à couper la tension de sortie de la borne de sortie de courant alternatif (Ou, Ov, Ow) est appliquée en entrée, le moyen de coupure (310, 320) coupe un ensemble de l'élément de commutation (Q1a) directement connecté à la borne de tension positive (N1), dans la section de circuit de sortie (110), et du second élément de commutation de type à blocage inverse (QR2), de manière à couper par conséquent la tension fournie en sortie à partir de la borne de sortie de courant alternatif (Ou, Ov, Ow) malgré l'état des signaux de commande ; et
lorsqu'une seconde commande de coupure destinée à couper la tension de sortie de la borne de sortie de courant alternatif (Ou, Ov, Ow) est appliquée en entrée, le moyen de coupure (310, 320) coupe un ensemble de l'élément de commutation (Q6a) directement connecté à la borne de tension négative (N2), dans la section de circuit de sortie (110), et du premier élément de commutation de type à blocage inverse (QR1), de manière à couper par conséquent la tension fournie en sortie à partir de la borne de sortie de courant alternatif (Ou, Ov, Ow) malgré l'état des signaux de commande.

2. Onduleur multiniveau selon la revendication 1, dans lequel :
le moyen de coupure (310, 320), lorsqu'une commande de coupure est appliquée en entrée, coupe à la fois l'ensemble de l'élément de commutation (Q1a) directement connecté à la borne de tension positive (N1), dans la section de circuit de sortie (110), et du second élément de commutation de type à blocage inverse (QR2), et l'ensemble de l'élément de commutation (Q6a) directement connecté à la borne de tension négative (N2), dans la section de circuit de sortie (110), et du premier élément de commutation de type à blocage inverse (QR1), malgré l'état des signaux de commande.

3. Onduleur multiniveau selon la revendication 1, dans lequel :
le moyen de coupure (310, 320), lorsqu'une commande de coupure est appliquée en entrée, envoie la commande de coupure au moyen de génération de signaux de commande (200), et subséquemment, coupe l'ensemble de l'élément de commutation (Q1a), directement connecté à la borne de tension positive (N1), dans la section de circuit de sortie (110), et du second élément de commutation de type à blocage inverse (QR2), ou l'ensemble de l'élément de commutation (Q6a) directement connecté à la borne de tension négative (N2), dans la section de circuit de sortie (110), et du premier élément de commutation de type à blocage inverse (QR1), avec un retard d'un temps prédéterminé, et **caractérisé en ce que** :
le moyen de génération de signaux de commande (200), qui a reçu la commande de coupure, coupe les éléments de commutation (Q1a-d, Q2, Q3, Q4, Q5, Q6a-d) de la section de circuit de sortie (110) et de la section de pont (120) dans l'ordre, selon une séquence d'arrêt prédéterminée.

4. Onduleur multiniveau selon la revendication 2, dans lequel :
le moyen de coupure (310, 320), lorsqu'une commande de coupure est appliquée en entrée, envoie la commande de coupure au moyen de génération de signaux de commande (200), et subséquemment, coupe l'ensemble de l'élément de commutation (Q1a) directement connecté à la borne de tension positive (N1), dans la section de circuit de sortie (110), et du second élément de commutation de type à blocage inverse (QR2), ou l'ensemble de l'élément de commutation (Q6a) directement connecté à la borne de tension négative (N2), dans la section de circuit de sortie (110), et du premier élément de commutation de type à blocage inverse (QR1), avec un retard d'un temps prédéterminé, et **caractérisé en ce que** :
le moyen de génération de signaux de commande (200) qui a reçu la commande de coupure coupe les éléments de commutation (Q1a-d, Q2, Q3, Q4, Q5, Q6a-d) de la section de circuit de sortie (110) et de la section de pont (120) dans l'ordre, selon une séquence d'arrêt prédéterminée.
